# EUROPEAN PATENT APPLICATION

(11) **EP 4 656 342 A1**
(43) Date of publication of application: **03.12.2025**
(21) Application number: 25179426.9
(22) Date of filing: 28.05.2025
(51) Int. Cl.: B27B 5/065, B27B 27/08, B23D 47/04, B27B 27/10

(54) **SECTIONING MACHINE FOR CUTTING PANELS AND OPERATING METHOD THEREOF**

(30) Priority: 31.05.2024 IT 202400012445
(71) Applicant: SCM Group S.p.A., 47921 Rimini (RN) (IT)
(72) Inventor: CAPITANI, Maurizio, 47921 RIMINI (IT); GIACOMINI, Marco, 47921 RIMINI (IT)
(74) Representative: Tiburzi, Andrea

(57) **Abstract**

The present invention relates to a sectioning machine (1) for cutting panels (P) made of wood, fiberglass, plastic, and similar materials, comprising a worktable (2) to support at least one panel (P) to be cut, comprising a pusher (21) having one or more clamps (211) for moving said at least one panel (P) on said worktable (2) in an advancement direction (A), and a cutting unit (3) for cutting said panel (P) along a cutting line (31). The cutting machine (1) also comprises an angular cutting unit (5).

The present invention also relates to a method of operation of a sectioning machine (1).

## Description

The present invention relates to an improved sectioning machine and operating method thereof.

### Field of the invention

More in detail, the invention concerns a sectioning machine for wood, fiberglass, plastic, and similar, for making angular cuts on panels, designed and manufactured, in particular, to increase the safety for the operators.

In the following, the description will be addressed to woodworking sectioning machines, but it is clear that the same should not be considered limited to this specific use.

### Prior art

As is well known, in the field of horizontal panel sectioning machines there are various solutions aimed at ensuring cuts both on the longitudinal and transversal directions.

These machines, especially those in the low-end market, allow to carry out angled cuts ranging from 0 to 45 degrees.

The technical solutions currently adopted present several technical problems in terms of safety and functionality.

A first aspect concerns the exit section of the sectioning machines, which comprises tables placed immediately after the cutting line, which are generally fixed and do not allow adjustments for different angled cuts.

The use of a goniometric square along the line of the tables, with an angled stop, is known, especially in more traditional machines. However, this solution does not comply with the requirements of current safety regulations. In fact, the presence of a fixed square in front of the cutting line can create obstacles and thus be a danger for the operator while using the machine.

Furthermore, as is known, the sectioning machines are equipped with a pusher. This pusher is used to position the panel, but it introduces a further element of danger, as it can lead to risks of injury for the operator.

Current safety regulations require that the exit section of the panel saw be free of obstacles. This safety condition is not always guaranteed by current configurations.

As for solutions that involve the use of a aligner to move the panel transversally, although this mechanism facilitates the positioning of the panel against a guide, its implementation on a retractable cart that must coordinate with the stop of the clamps or with a fixed stop and with the fin of the aligner, introduces a mechanical complexity that can affect the cutting precision and the general safety of the machine, as well as its production costs.

It is evident that solutions according to the prior art are expensive both in economic terms and in relation to the overall safety of the machines.

### Scope of the invention

In light of the above, it is therefore scope of the present invention to provide a horizontal sectioning machine that ensures greater safety for the operator, eliminating the obstacles and dangers associated with the presence of fixed squares and pushers in the cutting area.

Another scope of the invention is to propose a machine that allows the creation of angled cuts in a more flexible and precise way, overcoming the limits imposed by fixed tables and traditional stop systems, to adapt to a wide range of angles without compromising the safety of the operator or the quality of the cut.

A further scope of the present invention is to improve the functionality of horizontal sectioning machines through the implementation of a more efficient and safer panel positioning mechanism, which avoids excessive mechanical complexity and potential sources of error, while ensuring high precision in positioning the panel for cutting.

In addition, a further scope of the invention is to comply with current safety regulations by designing a machine that not only meets regulatory requirements, but also contributes to improving the working environment by reducing risks and optimizing operational processes.

### Object of the invention

It is specific object of the present invention a sectioning machine for cutting panels made of wood, fiberglass, plastic, and similar materials, comprising a worktable to support at least one panel to be cut, a pusher having one or more clamps for moving said at least one panel on said worktable in an advancement direction, and a cutting unit for cutting said panel along a cutting line, characterized in that it comprises an angular cutting group comprising a fixed element, arranged at an exit plane, and a guiding rod, hinged to said fixed element, so as to be angled relative to said fixed element, wherein the panel (P) is arranged to abut against said guiding rod, so that said cutting unit is arranged to cut said panel (P) at an angle (*α*) at which said guiding rod is inclined relative to said fixed element.

Always according to the invention, said angular cutting group can comprise an adjustment element arranged to fix the angled position of said guiding rod relative to said fixed element.

Still according to the invention, said fixed element may have a threaded hole, and said adjustment element can comprise a trapezoidal screw engaged with said threaded hole of said fixed element, wherein said trapezoidal screw has a first and a second end, and wherein said second end is coupled to said guiding rod.

Advantageously according to the invention, said sectioning machine may comprise a handwheel coupled to said first end of said trapezoidal screw.

Further according to the invention, said fixed element may be a fixing bar, and said fixing bar may be fixed to the side of one of said exit planes.

Preferably according to the invention, said fixed element may comprise a pin, and said guiding rod may be hinged to said pin at one end.

Always according to the invention, said angular cutting group may comprise a calibrated ruler, arranged on said worktable and movable by means of said clamps of said pusher, wherein, before cutting by said cutting unit, said panel (P) is placed against said calibrated ruler to adjust the position of said panel (P) before cutting.

Still according to the invention, said angular cutting group may comprise an optical detector, such as a laser, for adjusting the position of said panel before cutting.

A further object of the present invention is a method of operating a sectioning machine as defined above, comprising the following steps: placing said panel to be cut on said worktable; adjusting the angle between said guiding rod with respect to the fixed element of said angular cutting group; positioning a side of the panel to be cut against said guiding rod, placing part of the panel overlapping said cutting line; and cutting said panel by means of said cutting unit along said cutting line.

Always according to the invention, said method may comprise, before said cutting step D, the steps of: positioning said calibrated ruler by means of said pusher; and placing said panel against said calibrated ruler.

Still according to the invention, said method may comprise, before said cutting step D, the steps of: detecting the position of said panel by means of said optical detector; and placing said panel.

### Brief description of the figures

The present invention will be now described, for illustrative but not limitative purposes, according to its preferred embodiments, with particular reference to the figures of the enclosed drawings, wherein:
figure 1 shows a perspective view of a portion of a first embodiment of an improved sectioning machine according to the present invention;
figure 2 shows a top view of the exit portion of the sectioning machine of figure 1;
figure 3 shows a second embodiment of the sectioning machine according to the present invention in an angular cutting step; and
figure 4 shows a third embodiment of the sectioning machine according to the present invention in an angular cutting step.

### Detailed description

In the various figures, similar parts will be indicated with the same numerical references.

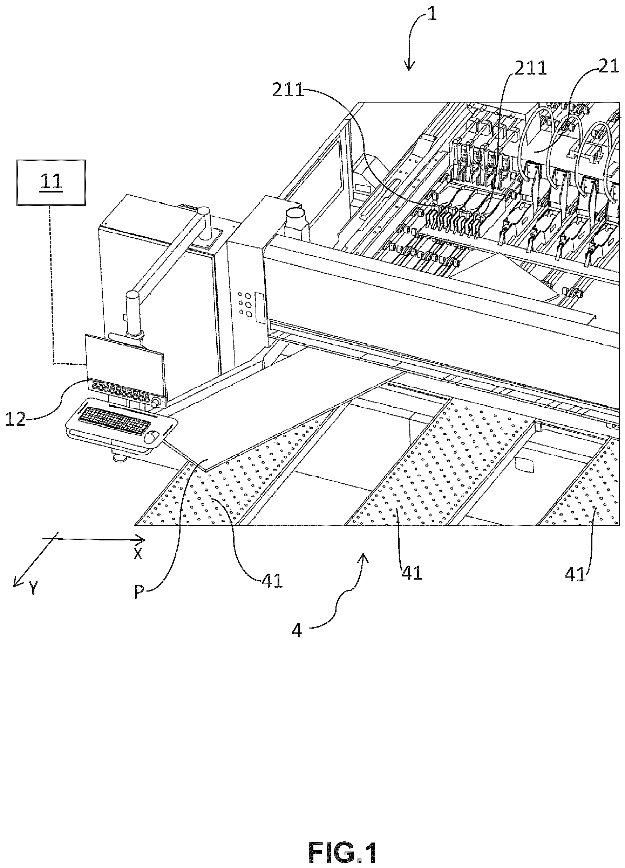

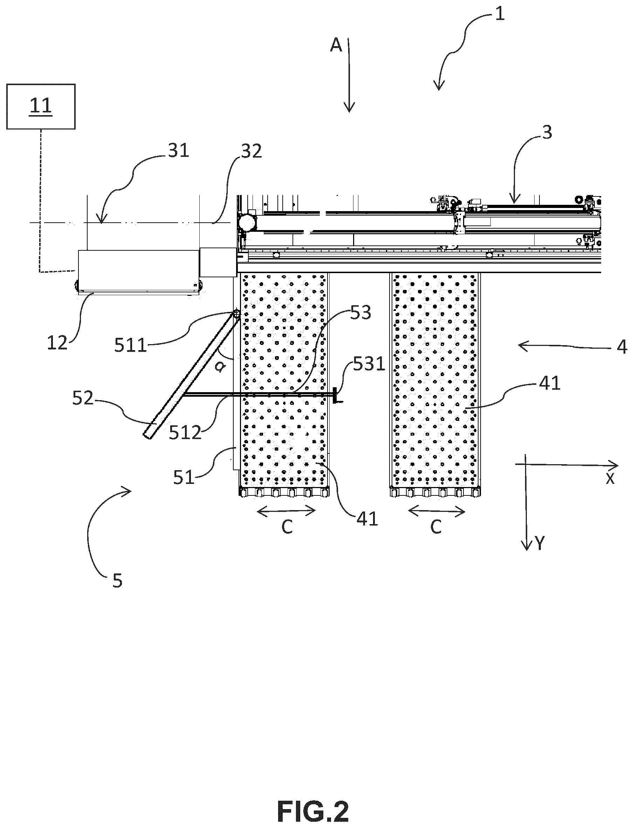

With reference to figures 1 and 2, a first embodiment of the angular sectioning machine according to the present invention can be observed, indicated overall with the numerical reference 1.

The sectioning machine 1 is, as mentioned, designed for cutting panels P of various materials, such as wood, fiberglass, plastic, and the like.

The sectioning machine 1 comprises a worktable 2, generally a bar table, to support one or more panels P to be cut.

The sectioning machine 1 also comprises a pusher 21 equipped with one or more clamps 211, movable along the X-axis of the Cartesian plane X-Y shown in figure 2. In this way, the clamps 211 are movable to grip panels P of different sizes. Said clamps 211 allow the movement of the panel P on the worktable 2 along a advancement direction A, which is parallel to the Y-axis of said Cartesian plane X-Y. This movement system allows the panel P to be positioned for cutting, as will be better described below.

The sectioning machine 1 also comprises a cutting unit 3, to cut the panel P along a straight cutting line 31.

Along the cutting line 31, a slot 32 is provided, from which a circular blade 33 can emerge, which can be moved vertically with respect to the worktable 2 by means of a suitable movement mechanism 34, generally of the hydraulic type. In particular, said circular blade 33 can be moved from a rest position to a working position, in which said circular blade 33 emerges from said slot 32.

The sectioning machine 1 also comprises an angular cutting unit 5, which allows angular cuts to be made using the cutting unit 3, as better described below.

The sectioning machine 1 also comprises an exit section 4, comprising in turn a plurality of planes 41, configured to support the portions of the panel P cut by the cutting unit 3. The cutting line 32 is arranged between the worktable 2 and the exit section 4.

In particular, as can be seen from figures 1 and 2, the planes 41 can be fixed or movable along the arrow C. The working planes 41 are separated and spaced apart.

The angular cutting group 5 comprises a fixed element 51, generally a fixing bar, fixed to an exit plane 41, and a guiding rod 52 which is hinged to said fixing bar 51.

This configuration allows the guiding rod 52 to be arranged at an angle *α* with respect to the fixing bar 51, thus facilitating the cutting of the panel P of said adjustable angle *α*, when one side of the panel P is in contact with said guiding rod 52.

To precisely adjust the angle *α*, the angular cutting group 5 is equipped with an adjustment element 53, which in the embodiment shown in figures 1 and 2 comprises a trapezoidal screw 53, which interacts with a threaded hole 512 obtained on the fixing bar 51. This adjustment system allows the angled position of the guiding rod 52 to be precisely fixed with respect to the fixing bar 51.

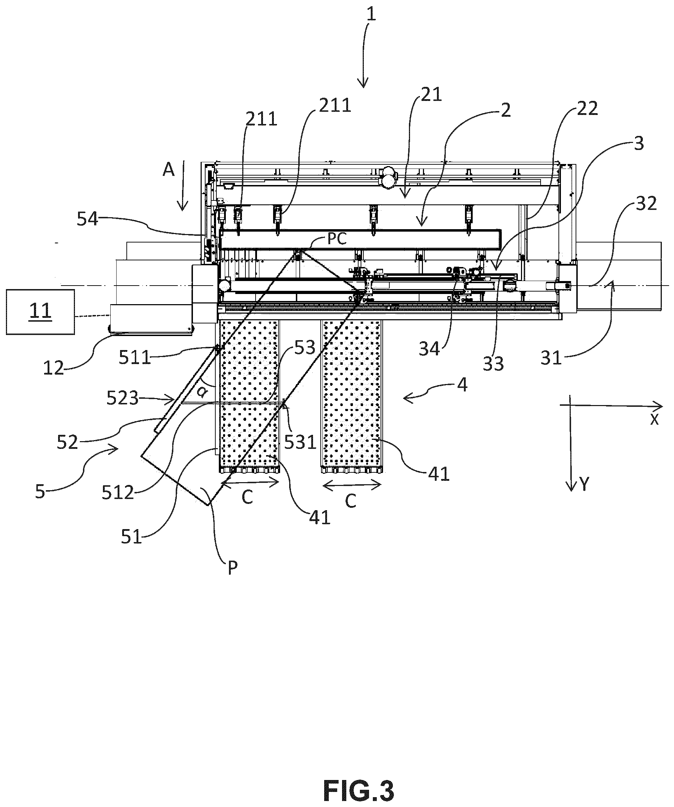

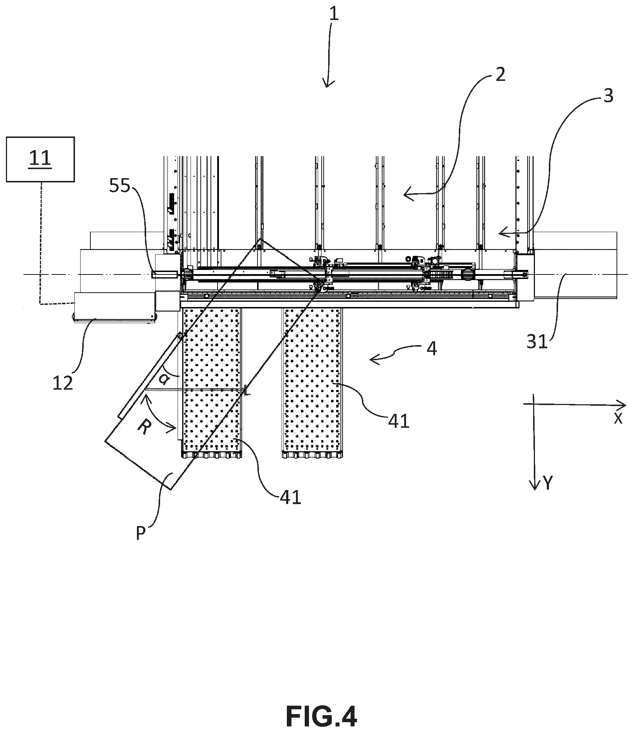

In some embodiments (see figures 3 or 4), the handwheel 533 is coupled to the end of the trapezoidal screw 53 to facilitate manual adjustment of the angle of the guiding rod 52 relative to said fixing bar 51. By rotating the handwheel 533, the guiding rod 52 rotates relative to said fixed element 51.

In a further embodiment, particularly shown in figure 3, the sectioning machine 1 is further designed for precise calibration of the position of the panel P before cutting, through the use of a calibrated ruler 54.

Figure 3 shows a second embodiment of a sectioning machine 1. In this embodiment, the panel P is abutted along a cusp PC with the calibrated ruler 54, which is, as mentioned, arranged parallel to said cutting line 31, and one side of said panel P abutted against said guiding rod 52.

In a further, third, embodiment, shown, in particular, in figure 4, the sectioning machine 1 comprises an optical detector 55, such as a laser, a video camera, and the like, to ensure optimal alignment of the panel P with respect to the cutting line 31. The laser line 55, when activated, is overlapped on the panel P for visual positioning of the panel P, overlapping said cutting line 31.

The sectioning machine 1 also comprises a control unit 11, connected to said optical detector 55 and to said display 12. By means of the display 12 the operator can adjust the angle *α*.

In other embodiments, the sectioning machine 1 comprises a presser for holding the panel P in position.

The operation of the sectioning machine 1 described above takes place as follows.

In particular, the panel P is initially positioned on the tablework 2, which as mentioned, is generally a bar table. Subsequently, the operator adjusts the angular position *α* of the guiding rod 52 with respect to said fixed element 51, using the trapezoidal screw 53, so as to define the cutting angle *α* desired.

Once the position of said guiding rod 52 has been adjusted, the panel P is positioned so that one of its sides abuts against the guiding rod 52, positioning the panel P in relation to the cutting line 31 by means of said pusher 21.

Subsequently, the cutting unit 3 is activated to perform the cut along said cutting line 31, according to the angle defined by the guiding rod 52.

In the configurations that comprise the calibrated ruler 54 and optical detector 55, these technologies are used prior to the cutting to further refine the position of the panel P, ensuring that the cut is performed accurately.

### Advantages

An advantage of the present invention is that of allowing panels to be cut at precise angles using the adjustable guiding rod, which can be angled relative to the fixed element, allowing cuts at various angles to be made easily and reliably.

Another advantage of the present invention is that of improving the operator safety by eliminating the need for fixed squares or other potentially dangerous elements in the cutting area, thus reducing the risk of injury while using the machine.

An additional advantage of the present invention is the ease of adjustment of the cutting angle by the adjustment element, such as the trapezoidal screw with handwheel, which allows operators to quickly and accurately set the desired angle without the use of complicated tools or lengthy processes.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Sectioning machine (1) for cutting panels (P) made of wood, fiberglass, plastic, and similar materials, comprising:
a worktable (2) to support at least one panel (P) to be cut,
a pusher (21) having one or more clamps (211) for moving said at least one panel (P) on said worktable (2) in an advancement direction (A), and
a cutting unit (3) for cutting said panel (P) along a cutting line (31),
**characterized in that** it comprises an angular cutting group (5) comprising:
a fixed element (51), arranged at an exit plane (41), and
a guiding rod (52), hinged to said fixed element (51), so as to be angled relative to said fixed element (51), wherein the panel (P) is arranged to abut against said guiding rod (52), so that said cutting unit (3) is arranged to cut said panel (P) at an angle (*α*) at which said guiding rod (52) is inclined relative to said fixed element (51).

2. Sectioning machine (1) according to claim 1, **characterized in that** said angular cutting group (5) comprises an adjustment element (53) arranged to fix the angled position of said guiding rod (52) relative to said fixed element (51).

3. Sectioning machine (1) according to the preceding claim, **characterized in that** said fixed element (51) has a threaded hole (512), and
**in that** said adjustment element comprises a trapezoidal screw (53) engaged with said threaded hole (512) of said fixed element (51),
wherein said trapezoidal screw (53) has a first (531) and a second (532) end, and
wherein said second end (532) is coupled to said guiding rod (52).

4. Sectioning machine (1) according to the preceding claim, **characterized in that** it comprises a handwheel (533) coupled to said first end (531) of said trapezoidal screw (53).

5. Sectioning machine (1) according to any one of the preceding claims, **characterized**
**in that** said fixed element is a fixing bar (51), and
**in that** said fixing bar (51) is fixed to the side of one of said exit planes (41).

6. Sectioning machine (1) according to any one of the preceding claims, **characterized**
**in that** said fixed element (51) comprises a pin (511), and
**in that** said guiding rod (52) is hinged to said pin (511) at one end.

7. Sectioning machine (1) according to any one of the preceding claims, **characterized in that** said angular cutting group (5) comprises a calibrated ruler (54), arranged on said worktable (2) and movable by means of said clamps (211) of said pusher (21),
wherein, before cutting by said cutting unit (3), said panel (P) is placed against said calibrated ruler (54) to adjust the position of said panel (P) before cutting.

8. Sectioning machine (1) according to any one of the preceding claims, **characterized in that** said angular cutting group (5) comprises an optical detector (55), such as a laser, for adjusting the position of said panel (P) before cutting.

9. Method of operating a sectioning machine (1) according to any one of claims 1-8, comprising the following steps:
A. placing said panel (P) to be cut on said worktable (2);
B. adjusting the angle (*α*) between said guiding rod (52) with respect to the fixed element (51) of said angular cutting group (5);
C. positioning a side of the panel (P) to be cut against said guiding rod (52), placing part of the panel (P) overlapping said cutting line (31); and
D. cutting said panel (P) by means of said cutting unit along said cutting line (31).

10. Method according to the preceding claim, when dependent on claim 7, **characterized in that** it comprises, before said cutting step **D,** the steps of:
- positioning said calibrated ruler (54) by means of said pusher (21); and
- placing said panel (P) against said calibrated ruler (54).

11. Method according to the preceding claim, when dependent on claim 8, **characterized in that** it comprises, before said cutting step D, the steps of:
- detecting the position of said panel (P) by means of said optical detector (55); and
- placing said panel (P).
